# FASCICULE DE BREVET EUROPEEN

(11) **EP 3 388 643 B1**
(45) Date de publication et mention de la délivrance du brevet: **13.11.2019**
(21) Numéro de dépôt: 18164281.0
(22) Date de dépôt: 27.03.2018
(51) Int. Cl.: F01D 25/24, H01R 12/70, H02G 3/00

(54) **CONNECTEUR ÉLECTRIQUE POUR CARTER DE TURBOMACHINE**
ELEKTRISCHER ANSCHLUSS FÜR GEHÄUSE EINER STRÖMUNGSMASCHINE
ELECTRICAL CONNECTOR FOR TURBINE ENGINE CASING

(30) Priorité: 14.04.2017 BE 201705264
(43) Date de publication de la demande: 17.10.2018
(73) Titulaire: Safran Aero Boosters SA, 4041 Herstal (BE)
(72) Inventeur: VALLINO, Frédéric, 4100 Seraing (BE)
(74) Mandataire: Lecomte & Partners

(56) Documents cités:
- EP-A2- 1 156 211
- BE-A- 582 614
- FR-A- 1 071 709

## Description

### Domaine technique

L'invention se rapporte au domaine des branchements électriques au niveau de carters de turbomachine. L'invention a également trait à une turbomachine axiale, notamment un turboréacteur d'avion ou un turbopropulseur d'aéronef.

### Technique antérieure

L'aéronautique vise à développer un avion tout électrique. Dans ce contexte, nombre de dispositifs adoptent une alimentation électrique. Or, ces différents dispositifs sont montés sur les différents carters supports de la turbomachine, et nécessitent des branchements particuliers n'entravant en rien le montage des divers carters supports. Ce montage devient complexe en raison de la masse, de l'encombrement, de la compacité, du manque de visibilité et du peu de points de manipulation de ses carters.

Le document EP 1 811 132 A1 divulgue une turbomachine comprenant un générateur-démarreur électrique dont le rotor est entraîné par l'arbre d'un compresseur haute-pression et dont le stator est porté par un carter intermédiaire de la turbomachine, le générateur-démarreur étant enfermé dans un boîtier étanche monté dans une enceinte amont de la turbomachine qui est située à l'intérieur du carter intermédiaire et qui contient de l'huile, le boîtier étanche du générateur-démarreur étant alimenté en air sous pression. Le boîtier étanche comprend des premiers moyens de raccordement à des câbles électriques montés dans des bras structuraux du carter intermédiaire, ces premiers moyens de raccordement étant étanches et s'étendant à l'intérieur d'une chambre délimitée par le boîtier et par le carter intermédiaire et alimentée en air sous pression. Les moyens de raccordement présentent en particulier des broches faisant saillie par rapport à une paroi annulaire et qui sont destinées à s'enficher dans des tubes conducteurs lors du branchement. Le branchement nécessite une mise en correspondance précise des broches, sans quoi elles risqueraient de se tordre lors de leur enfoncement. Un autre procédé de démarrage et de mise en charge de turbines à vapeur et à gaz est divulgué dans le document FR 1071709.

### Résumé de l'invention

### Problème technique

L'invention a pour objectif de résoudre au moins un des problèmes posés par l'art antérieur. Plus précisément, l'invention a pour objectif de faciliter le montage d'un carter de turbomachine comportant un connecteur électrique. L'invention a également pour objectif de proposer une solution résistante, fiable, facile à produire, commode d'entretien, d'inspection aisée, et optimisant le montage en aveugle.

### Solution technique

L'invention a pour objet un carter de turbomachine, notamment pour compresseur de turbomachine axiale, le carter comprenant : une paroi, et au moins une bride de fixation associée à la paroi, la bride de fixation comprenant une surface de fixation apte à être appliquée contre une surface de montage correspondante de la turbomachine, ou contre une autre surface de fixation, remarquable en ce que la bride de fixation comprend au moins un connecteur électrique avec une extrémité affleurant la surface de fixation de ladite bride de fixation. L'invention étant également remarquable en ce que la paroi est une première paroi, le carter comprenant en outre une deuxième paroi avec une bride de fixation et un connecteur électrique identiques ou similaires à ceux associés à la première paroi, les brides de fixation étant fixées ensemble de manière à assurer un contact électrique entre les connecteurs. Ces derniers aspects (deuxième paroi) sont optionnels et peuvent être remplacés par divers combinaison des caractéristiques suivantes, prises isolément ou selon toutes les combinaisons techniques possibles :
- Le connecteur électrique comprend une surface d'extrémité qui affleure la surface de fixation de la bride de fixation, et/ou qui est au niveau de la surface de fixation.
- La bride présente une épaisseur, le connecteur traversant ladite bride selon son épaisseur.
- Le carter, notamment la bride de fixation, comprend des moyens d'indexage adaptés pour permettre une précision de positionnement supérieure ou égale à la largeur du connecteur électrique au niveau de la surface de fixation.
- La surface de fixation forme un plan perpendiculaire ou incluant l'axe de rotation de la turbomachine.
- Le connecteur électrique présente généralement une forme de tige avec un allongement principal selon l'épaisseur de la bride de fixation.
- Le connecteur électrique comprend un élargissement à au moins une de ses extrémités, ou à ses deux extrémités opposées selon l'allongement principal dudit connecteur électrique.
- Le connecteur électrique est positionné dans la hauteur, notamment radiale, de la bride.
- La bride de fixation comprend des moyens de fixation, notamment des orifices et/ou des axes de fixation, le connecteur électrique étant à hauteur radialement desdits moyens de fixation.
- La bride de fixation comprend en outre un logement positionné dans sa hauteur radiale, le connecteur étant placé dans ledit logement.
- La bride de fixation comprend un isolant électrique entourant le connecteur électrique et séparant le connecteur de la bride de fixation, l'isolant électrique forme éventuellement un joint d'étanchéité entre la bride de fixation et le connecteur électrique.
- Le connecteur est branché à un câble électrique, ledit câble pénétrant éventuellement la bride de fixation.
- Le carter est formé par un matériau composite à matrice organique et avec des fibres de renfort, éventuellement conductrices électriquement.
- La paroi forme un cercle ou un demi-cercle, et/ou la bride de fixation est une bride arquée ou une bride axiale.
- La paroi présente une épaisseur, la bride de fixation formant un rebord en surépaisseur par rapport à l'épaisseur de la paroi, et/ou la bride de fixation s'étend perpendiculairement par rapport à la paroi.
- Le carter comprend en outre une troisième paroi avec une bride de fixation et un connecteur électrique identiques ou similaires à ceux associés à la première paroi, la surface de fixation de la bride de la troisième paroi étant une première surface de fixation, ladite bride comprenant une deuxième surface de fixation opposée à la première surface de fixation selon l'épaisseur de ladite bride, le connecteur électrique de la troisième paroi affleurant chacune des surfaces de fixation de la troisième paroi, éventuellement ladite troisième paroi est en contact des surfaces de fixation de la première et de la deuxième paroi.
- La bride présente un rayon externe, le connecteur étant disposé à l'intérieur dudit rayon externe.
- La surface d'extrémité et/ou la section du connecteur au niveau de la surface de fixation présente une surface supérieure ou égale : à 0,50mm2, ou 1,00mm2, ou 3,00mm2, ou 10mm2.
- La paroi comporte deux demi-coquilles.
- La paroi est généralement tubulaire ou en ellipsoïde.
- La surface de fixation est au moins partiellement formée par l'isolant électrique.
- Au moins un ou chaque connecteur électrique est monobloc.
- La surface de fixation est généralement plane, et s'étend sur toute une face et/ou tout un bord de la paroi.
- L'isolant électrique remplit le logement de la bride.
- Le carter est un carter annulaire, les brides étant des brides annulaires.
- Le câble épouse la surface extérieure de la paroi du carter externe.
- Les connecteurs électriques sont alignés, et/ou dans le prolongement l'un de l'autre, ou les uns des autres.
- Le connecteur électrique est un premier électrique, le carter comporte un deuxième connecteur électrique affleurant la surface de montage et étant placé en correspondance avec le premier connecteur afin de permettre un contact électrique entre lesdits connecteurs.
- La bride de fixation comprend une surface opposée à la surface de fixation selon l'épaisseur de ladite bride de fixation, le connecteur électrique faisant saillie par rapport à ladite surface opposée.
- Le logement comprend en outre un isolant électrique, positionné entre le connecteur et la bride.
- Les connecteurs sont parallèles, notamment des tiges parallèles.
- La bride comprend une pluralité de connecteurs électriques, éventuellement agencés circulairement et/ou selon un quadrillage.

L'invention a également pour objet une turbomachine, notamment un turboréacteur, comprenant au moins un carter, remarquable en ce que le carter est conforme à l'invention, la turbomachine comprend un compresseur, le carter étant un carter dudit compresseur.

Selon des modes avantageux de l'invention, la turbomachine peut comprendre une ou plusieurs des caractéristiques suivantes, prises isolément ou selon toutes les combinaisons techniques possibles :
- La turbomachine comprend un bec de séparation avec un module de dégivrage électrique connecté électriquement au connecteur électrique.
- La turbomachine comprend une soufflante et un carter support de soufflante sur lequel est formée la surface de montage, la surface de montage comprenant une connexion électrique affleurant la surface de montage et en contact électrique du, ou d'au moins un connecteur électrique.
- La bride est une bride délimitant un système de dégivrage.
- La turbomachine comprend des moyens d'indexage correspondant.
- La turbomachine comprend un rotor, le carter entourant ledit rotor.

Chaque caractéristique énoncée en relation avec une paroi, une bride, un connecteur, une surface de fixation peut s'appliquer à toute paroi, bride, connecteur, ou surface de fixation du carter. De manière générale, les modes avantageux de chaque objet de l'invention sont également applicables aux autres objets de l'invention. Chaque objet de l'invention est combinable aux autres objets, et les objets de l'invention sont également combinables aux modes de réalisation de la description, qui en plus sont combinables entre eux, selon toutes les combinaisons techniques possibles.

### Avantages apportés

L'invention permet un branchement sûr lors de l'assemblage du carter, ou lors du montage de différentes parties sur ce même carter. Les mouvements d'approche et d'ajustement de la bride de fixation ne représentent aucun risque pour le connecteur puisque ce dernier fait face à un plan matérialisé par la surface de montage. Le plan en question est essentiellement libre de parties en saillies, présentant un caractère agressif dans le domaine des connections. Le mouvement d'approche peut avantageusement s'effectuer selon une direction perpendiculaire à la surface de fixation.

### Brève description des dessins

La figure 1 représente une turbomachine axiale selon l'invention.
La figure 2 est un schéma d'un compresseur de turbomachine selon l'invention.
La figure 3 est une section du carter externe au niveau d'une bride de fixation selon l'invention.
La figure 4 est une section d'une bride de fixation comprenant un connecteur selon l'invention.
La figure 5 est un schéma représentant une série de brides de fixation comprenant des connecteurs selon l'invention.

### Description des modes de réalisation

Dans la description qui va suivre, les termes « interne » et « externe » renvoient à un positionnement par rapport à l'axe de rotation d'une turbomachine axiale. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine.

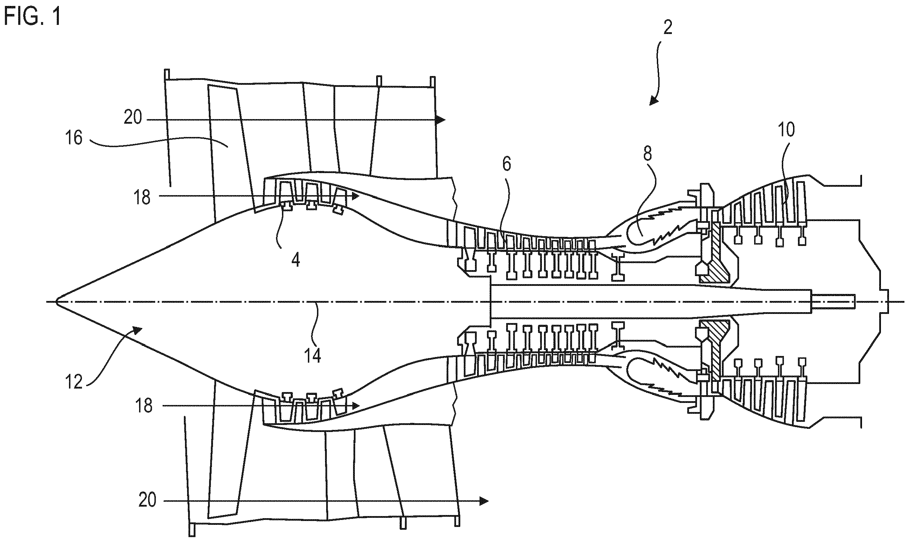

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12 et génère un flux d'air qui se divise en un flux primaire 18 traversant les différents niveaux sus mentionnés de la turbomachine, et en un flux secondaire 20 traversant un conduit annulaire (partiellement représenté) le long de la machine pour ensuite rejoindre le flux primaire en sortie de turbine.

Le flux secondaire peut être accéléré de sorte à générer une réaction de poussée. Les flux primaire 18 et secondaire 20 sont des flux annulaires coaxiaux et emmanchés l'un dans l'autre. Ils sont canalisés par le carter de la turbomachine et/ou des viroles. A cet effet, le carter présente des parois cylindriques qui peuvent être internes et externes.

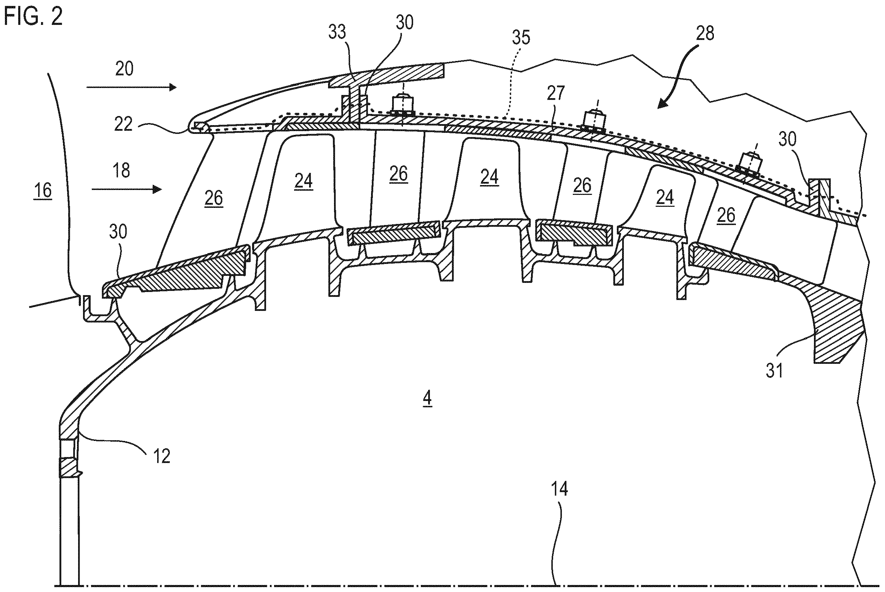

La figure 2 est une vue en coupe d'un compresseur d'une turbomachine axiale telle que celle de la figure 1. Le compresseur peut être un compresseur basse-pression 4. On peut y observer une partie de la soufflante 16 et le bec de séparation 22 du flux primaire 18 et du flux secondaire 20. Le rotor 12 comprend plusieurs rangées d'aubes rotoriques 24, en l'occurrence trois. Il peut être un tambour monobloc aubagé, ou comprendre des aubes à fixation par queue d'aronde.

Le compresseur basse pression 4 comprend plusieurs redresseurs, en l'occurrence quatre, qui contiennent chacun une rangée d'aubes statoriques 26. Les redresseurs sont associés au fan 16 ou à une rangée d'aubes rotoriques pour redresser le flux d'air, de sorte à convertir la vitesse du flux en pression.

Les aubes statoriques 26 s'étendent essentiellement radialement depuis un carter extérieur 28, et peuvent y être fixées et immobilisées à l'aide d'axes.

Eventuellement, les aubes statoriques d'une ou de plusieurs rangées annulaires peuvent être à orientation variables, également appelées aubes à calage variable. Le carter 28 peut être formé de plusieurs anneaux, ou de demi-coquilles. Ces demi-coquilles peuvent être réunies par des brides de fixation 30 s'étendant radialement, par exemple vers l'extérieur.

Les brides 30 peuvent être reliées par une paroi annulaire 27 qui supporte les aubes statoriques 26. Les brides 30 s'étendent perpendiculairement à la paroi 27. La paroi 27 et/ou les brides 30 peuvent être réalisées en matériau composite, par exemple à matrice organique. La matrice peut être renforcée par des fibres, éventuellement agencées en fils et/ou en plis fibreux et/ou en préforme(s) tissée(s). Pour rappel, ces agencements de fibres peuvent conduire l'électricité, notamment lorsqu'il s'agit de fibres de carbone et/ou de graphite.

Le carter 28, notamment ses brides annulaires et sa paroi entourent l'axe de rotation 14, et donc le rotor 12.

Une bride 30 en aval peut être reliée au carter intermédiaire 31, qui supporte la soufflante 16. Le carter intermédiaire 31, également appelé carter support de soufflante 31, peut présenter une surface de montage qui reçoit le compresseur 4 via ladite bride 30.

Une bride 30 amont permet de monter le bec de séparation 22. Ce dernier peut monter une bride de fixation, ou bride de montage, qui se lie à la bride 30 amont du carter 28. En complément, une troisième bride peut se lier à la bride amont, et permet par exemple la fixation d'un panneau acoustique 33. Ainsi, au moins trois brides, par exemple annulaires, peuvent être fixées les unes aux autres ; et/ou s'empiler.

La turbomachine inclue une liaison électrique 35 reliant un dispositif dégivrant électrique du bec de séparation 22 au carter intermédiaire 31, qui lui-même peut être branché à une alimentation électrique de la turbomachine ou de l'avion. La liaison 35 peut alimenter un ou plusieurs actionneurs d'aubes à orientation variable. Elle peut également être branchée à des capteurs. La liaison électrique peut traverser axialement la paroi 27 ; et les brides de fixation 30, notamment selon leurs épaisseurs.

D'autres brides de fixation, notamment des brides axiales, peuvent être prévues à la liaison des demi-coquilles formant le carter 28.

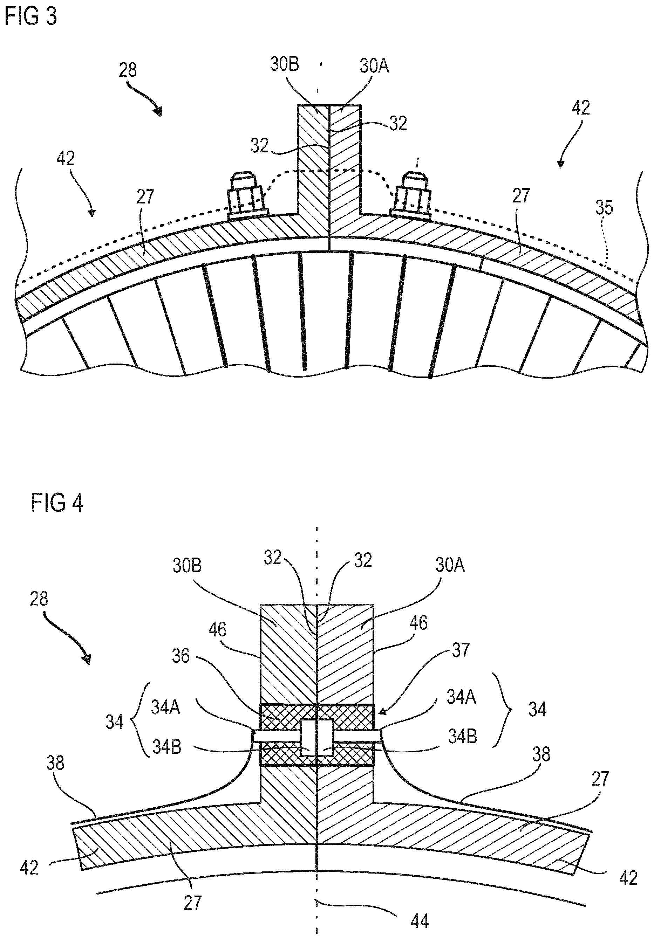

La figure 3 est une section du carter externe 28 au niveau d'une interface formée par deux surfaces de fixation 32 d'une première bride de fixation 30A et d'une deuxième bride de fixation 30B. Cet agencement peut correspondre à celui entre les brides axiales mentionnées en relation avec la figure 2. Les brides (30A ; 30B) sont traversées par la liaison électrique 35, notamment selon la direction circonférentielle. La paroi 27 est scindée.

Les brides de fixation (30A ; 30B) sont en continuité de la paroi 27 du carter 28. Chaque demi-coquille 42 du carter externe 28 comprend une moitié de la paroi 27, cette dernière étant prolongée radialement par les brides de fixation (30A ; 30B). Les deux brides de fixation (30A ; 30B) des demi-coquilles du carter externe 28 adjacentes sont accolées via leurs surfaces de fixation 32.

La figure 4 montre un agrandissement de la jonction entre les brides de fixation tracées en figure 3.

Les brides de fixation (30A ; 30B) sont accolées suivant un plan 44 qui inclue l'axe de rotation de la turbomachine. A l'interface entre les surfaces de fixation 32, notamment au niveau du plan 44, la jonction électrique présente des connecteurs électriques 34, éventuellement prolongés par des câbles électriques 38. Ces derniers peuvent être collés contre la surface externe de la paroi 27. Ici, le connecteur 34 peut s'étendre principalement selon la circonférence.

Les brides de fixation (30A ; 30B) sont percées par un orifice, également appelé logement 37. Chaque logement 37 peut être comblé par un isolant électrique 36 ou joint 36. À l'intérieur de cet isolant 36 se trouvent des connecteurs 34. Chaque connecteur 34 peut présenter un élargissement 34B au niveau de la surface de fixation 32 de la bride correspondante. Le ou les élargissements 34B sont disposés en extrémité de connecteur 34. Chaque élargissement 34B permet d'augmenter la surface de contact électrique, et réduit éventuellement les échauffements par effet Joule à l'interface électrique.

À l'arrière de cet élargissement 34B, le connecteur 34 présente une section amincie 34A, ou tronçon de section réduite 34A, qui fait la liaison avec les câbles électriques 38, alimentant en électricité les deux demi-coquilles 42 du connecteur 34. Ces câbles 28 peuvent être fixés sur la paroi 27 du carter externe 28, ou intégré dans la paroi 27. Au moins un ou chaque élargissement est optionnel. Une section réduite 34A peut venir en contact électrique d'une autre section réduite 34A ou d'un élargissement 34B.

Les brides de fixation (30A ; 30B) peuvent présenter des surfaces opposées 46 à leurs surfaces de fixation 32. Les extrémités libres des sections réduites 34A peuvent faire saillie par rapport aux surfaces opposées 46, notamment pour être en contact électrique des câbles 38.

Chaque connecteur 34 permet donc d'avoir une conduction électrique entre les différentes demi-coquilles 42 du carter 28, malgré la coupure mécanique entre les demi-coquilles 42. Optionnellement, les connecteurs électriques présentent un élargissement antérieur de taille supérieure à l'élargissement postérieur du connecteur 34 positionné dans la bride adjacente.

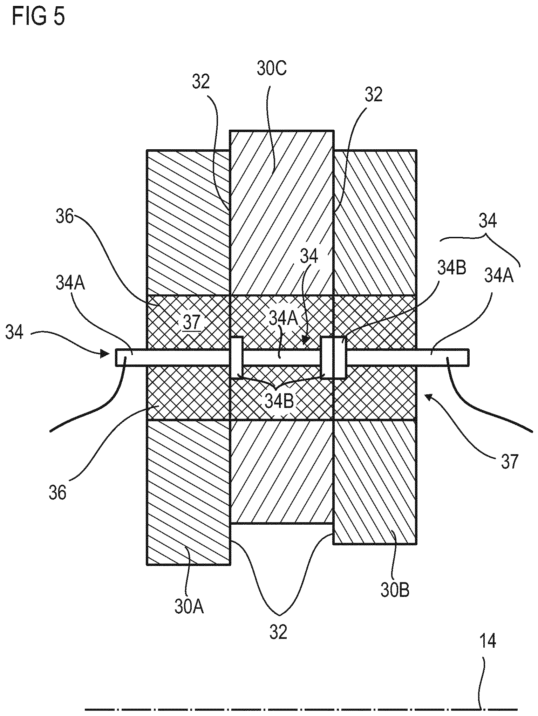

La figure 5 est un schéma représentant la triplette de brides de fixation (30A ; 30B ; 30C) en amont du carter tel que représenté en figure 2. L'axe de rotation 14 est ajouté en guise de repère.

Cet agencement de bride rappelle celui de la figure 4, toutefois il s'en distingue en ce qu'une troisième bride 30C est intercalée entre les deux premières. Ainsi, trois brides de fixation (30A ; 30B ; 30C) sont plaquées les unes contre les autres, leurs surface de fixation 32 étant en contact les unes des autres.

Chaque bride (30A ; 30B ; 30C) présente un logement 37 qui est traversé par un connecteur 34. Ces derniers peuvent ou non comprendre un élargissement 34B à l'extrémité de leur section réduite 34A.

Les connecteurs 34 traversent l'ensemble de ces brides 34, et permettent la conduction électrique d'un côté à l'autre des brides. Les connecteurs 34 sont en contact mécanique, et donc électrique. Ils forment alors un alignement. Toutefois ils tolèrent des décalages radiaux et/ou selon la circonférence. Les connecteurs 34 forment des tiges aboutées. Les surfaces en extrémités de connecteurs permettent les connections électriques. Elles sont optionnellement sensiblement bombées, c'est-à-dire convexes.

Les joints 36 remplissent les logements 37 ; et donc l'espace entre les connecteurs électriques 34 et les surfaces intérieures des logements. Ces joints 36 peuvent être réalisés un en matériau non conducteur électriquement.

Des ergots de positionnement (non représentés) peuvent être ajoutés sur les brides de fixation et/ou les carters. Ces ergots, ou pions, pénètrent des trous ajustés afin de permettre un indexage précis de la position du carter lors de son montage. Cela garanti le bon positionnement des connecteurs les uns par rapport aux autres.

Des moyens d'étanchéité complémentaires peuvent délimiter les brides et/ou les connecteurs électriques 34 afin de protéger ces derniers.

Les enseignements décrits en relation avec la figure 5 peuvent également s'appliquer à ceux de la figure 4, et réciproquement.

## Revendications

1. Carter (28) de turbomachine (2), notamment pour compresseur (4 ; 6) de turbomachine axiale, le carter (28) comprenant :
- une paroi (27), et
- au moins une bride de fixation (30) associée à la paroi (27), la bride de fixation (30) comprenant une surface de fixation apte à être appliquée contre une surface de montage correspondante de la turbomachine (2), ou contre une autre surface de fixation,
**caractérisé en ce que**
la bride de fixation (30) comprend au moins un connecteur électrique (34) avec une extrémité affleurant la surface de fixation (32) de ladite bride de fixation (30) et **en ce que** la paroi (27) est une première paroi (27), le carter (28) comprenant en outre une deuxième paroi (27) avec une bride de fixation et un connecteur électrique (34) identiques ou similaires à ceux associés à la première paroi (27), les brides de fixation (30A ; 30B) étant fixées ensemble de manière à assurer un contact électrique entre les connecteurs (34).

2. Carter (28) selon la revendication 1, **caractérisé en ce que** le connecteur électrique (34) comprend une surface d'extrémité qui affleure la surface de fixation (32) de la bride de fixation (30), et/ou qui est au niveau de la surface de fixation (32).

3. Carter (28) selon l'une des revendications 1 à 2, **caractérisé en ce que** la bride (30) présente une épaisseur, le connecteur (34) traversant ladite bride (30) selon son épaisseur.

4. Carter (28) selon l'une des revendications 1 à 3, **caractérisé en ce qu'**il, notamment la bride de fixation (30), comprend des moyens d'indexage adaptés pour permettre une précision de positionnement supérieure ou égale à la largeur du connecteur électrique (34) au niveau de la surface de fixation (32).

5. Carter (28) selon l'une des revendications 1 à 4, **caractérisé en ce que** le connecteur électrique (34) présente généralement une forme de tige avec un allongement principal selon l'épaisseur de la bride de fixation (30).

6. Carter (28) selon l'une des revendications 1 à 5, **caractérisé en ce que** le connecteur électrique (34) comprend un élargissement (34B) à au moins une de ses extrémités, ou à ses deux extrémités opposées selon l'allongement principal dudit connecteur électrique.

7. Carter (28) selon l'une des revendications 1 à 6, **caractérisé en ce que** la bride de fixation (30) comprend des moyens de fixation, notamment des orifices et/ou des axes de fixation, le connecteur électrique (34) étant à hauteur radialement desdits moyens de fixation.

8. Carter (28) selon l'une des revendications 1 à 7, **caractérisé en ce que** la bride de fixation (30) comprend en outre un logement (37) positionné dans sa hauteur radiale, le connecteur (34) étant placé dans ledit logement (37).

9. Carter (28) selon l'une des revendications 1 à 8, **caractérisé en ce que** la bride de fixation (30) comprend un isolant électrique (36) entourant le connecteur électrique (34) et séparant le connecteur de la bride de fixation, l'isolant électrique formant éventuellement un joint d'étanchéité entre la bride de fixation (30) et le connecteur électrique (34).

10. Carter (28) selon l'une des revendications 1 à 9, **caractérisé en ce que** le connecteur (34) est branché à un câble électrique (38), ledit câble pénétrant éventuellement la bride de fixation (30).

11. Carter (28) selon l'une des revendications 1 à 10, **caractérisé en ce que** le carter (28) comprend un matériau composite à matrice organique et avec des fibres de renfort, éventuellement conductrices électriquement.

12. Carter (28) selon l'une des revendications 1 à 11, **caractérisé en ce qu'**il comprend en outre une troisième paroi (32) avec une bride de fixation et un connecteur électrique (34) identiques ou similaires à ceux associés à la première paroi (27), la surface de fixation (32) de la bride de la troisième paroi étant une première surface de fixation (32), ladite bride comprenant une deuxième surface de fixation (32) opposée à la première surface de fixation selon l'épaisseur de ladite bride, le connecteur électrique (34) de la troisième paroi affleurant chacune des surfaces de fixation de la troisième paroi, éventuellement ladite troisième paroi est en contact des surfaces de fixation de la première et de la deuxième paroi.

13. Turbomachine (2), notamment un turboréacteur, comprenant au moins un carter (28), **caractérisée en ce que** le carter est conforme à l'une des revendications 1 à 12, la turbomachine comprend un compresseur (4 ; 6), le carter étant un carter (28) dudit compresseur.

14. Turbomachine (2) selon la revendication 13, **caractérisée en ce qu'**elle comprend un bec de séparation (22) avec un module de dégivrage électrique connecté électriquement au connecteur électrique (34).

15. Turbomachine (2) selon l'une des revendications 13 ou 14, **caractérisée en ce qu'**elle comprend une soufflante (16) et un carter support (31) de soufflante (16) sur lequel est formée la surface de montage, la surface de montage comprenant une connexion électrique affleurant la surface de montage et en contact électrique du connecteur électrique (34).

## Patentansprüche

1. Gehäuse (28) einer Turbomaschine (2), insbesondere für einen Kompressor (4; 6) einer axialen Turbomaschine, wobei das das Gehäuse (28) umfasst:
- eine Wand (27) und
- mindestens einen Befestigungsflansch (30), der mit der Wand (27) verbunden ist, wobei der Befestigungsflansch (30) eine Befestigungsoberfläche umfasst, die geeignet ist, gegen eine entsprechende Montageoberfläche der Turbomaschine (2) angebracht zu werden oder gegen eine andere Befestigungsoberfläche,
**gekennzeichnet dadurch, dass**
der Befestigungsflansch (30) mindestens einen elektrischen Verbinder (34) umfasst mit einem Ende, das mit der Befestigungsoberfläche (32) des besagten Befestigungsflansches (30) bündig ist, und dadurch, dass die Wand (27) eine erste Wand (27) ist, dass das Gehäuse (28) weiter eine zweite Wand (27) mit einem Befestigungsflansch und einem elektrischem Verbinder (34) umfasst, der identisch oder ähnlich zu denen, die mit der ersten Wand (27) verbunden sind, wobei die Befestigungsflansche (30A; 30B) derart zusammen befestigt sind, um einen elektrischen Kontakt zwischen den Verbindern (34) sicherzustellen.

2. Gehäuse (28) nach Anspruch 1, **dadurch gekennzeichnet, dass** der elektrische Verbinder (34) eine Endoberfläche umfasst, die bündig ist mit der Befestigungsoberfläche (32) des Befestigungsflansches (30) und/oder die sich an der der Befestigungsoberfläche (32) befindet.

3. Gehäuse (28) nach einem der Ansprüche 1 bis 2, **dadurch gekennzeichnet, dass** der Flansch (30) eine Dicke hat und dass der Verbinder (34) den besagten Flansch (30) in Richtung seiner Dicke durchquert.

4. Gehäuse (28) nach einem der Ansprüche 1 bis 3, **dadurch gekennzeichnet, dass** es, insbesondere der Befestigungsflansch (30), Indexiermittel umfasst, die dazu angepasst sind, eine Positioniergenauigkeit zu erlauben, die größer oder gleich ist als die Breite des elektrischen Verbinders (34) an der Befestigungsoberfläche (32).

5. Gehäuse (28) nach einem der Ansprüche 1 bis 4, **dadurch gekennzeichnet, dass** der elektrische Verbinder (34) allgemein eine Form eines Stabes mit einer Haupterstreckung in Richtung der Dicke des Befestigungsflansches (30) hat.

6. Gehäuse (28) nach einem der Ansprüche 1 bis 5, **dadurch gekennzeichnet, dass** der elektrische Verbinder (34) eine Verbreiterung (34B) an einem seiner Enden umfasst, oder an seinen beiden gegenüberliegenden Enden in Richtung der Haupterstreckung des besagten elektrischen Verbinders.

7. Gehäuse (28) nach einem der Ansprüche 1 bis 6, **dadurch gekennzeichnet, dass** der Befestigungsflansch (30) Befestigungsmittel umfasst, insbesondere Öffnungen und/oder Befestigungsachsen, wobei sich der elektrische Verbinder (34) in der radialen Höhe der besagten Befestigungsmittel befindet.

8. Gehäuse (28) nach einem der Ansprüche 1 bis 7, **dadurch gekennzeichnet, dass** der Befestigungsflansch (30) weiter eine Einhausung (37) umfasst, die in seiner radialen Höhe platziert ist, wobei der Verbinder (34) in besagter Einhausung (37) platziert ist.

9. Gehäuse (28) gemäß einem der Ansprüche 1 bis 8, **dadurch gekennzeichnet, dass** der Befestigungsflansch (30) einen elektrischen Isolator (36) umfasst, der den elektrischen Verbinder (34) umgibt und den Verbinder von dem Befestigungsflansch trennt, wobei der elektrische Isolator möglicherweise eine Dichtung zwischen dem Befestigungsflansch (30) und dem elektrischen Verbinder (34) bildet.

10. Gehäuse (28) nach einem der Ansprüche 1 bis 9, **dadurch gekennzeichnet, dass** der Verbinder (34) an ein elektrisches Kabel (38) angeschlossen ist, wobei das besagte Kabel möglicherweise in den Befestigungsflansch (30) führt.

11. Gehäuse (28) nach einem der Ansprüche 1 bis 10, **dadurch gekennzeichnet, dass** das Gehäuse (28) einen Verbundwerkstoff mit einer organischen Matrix und mit Verstärkungsfasern umfasst, die möglicherweise elektrisch leitfähig sind.

12. Gehäuse (28) nach einem der Ansprüche 1 bis 11, **dadurch gekennzeichnet, dass** es ferner eine dritte Wand (32) mit einem Befestigungsflansch und einem elektrischen Verbinder (34) identisch oder ähnlich zu denen, die mit der ersten Wand (27) verbunden sind, umfasst, wobei die Befestigungsoberfläche (32) des Befestigungsflansches der dritten Wand eine erste Befestigungsoberfläche (32) ist, wobei der besagte Flansch eine zweite Befestigungsoberfläche (32) gegenüber der ersten Befestigungsoberfläche in Richtung der Dicke des besagten Flansches hat, wobei der elektrische Verbinder (34) der dritten Wand bündig ist mit jeder der Befestigungsoberflächen der dritten Wand, wobei die besagte dritte Wand möglicherweise in Kontakt ist mit den Befestigungsoberflächen der ersten und der zweiten Wand.

13. Turbomaschine (2), insbesondere ein Strahltriebwerk, umfassend mindestens ein Gehäuse (28), **dadurch gekennzeichnet, dass** das Gehäuse gemäß einem der Ansprüche 1 bis 12 ist, wobei die Turbomaschine einen Kompressor (4; 6) umfasst und wobei das Gehäuse ein Gehäuse (28) des besagten Kompressors ist.

14. Turbomaschine (2) nach Anspruch 13, **dadurch gekennzeichnet, dass** sie einen Durchflussabscheider (22) mit einem elektrischen Enteisungsmodul umfasst, das elektrisch mit dem elektrischen Verbinder (34) verbunden ist.

15. Turbomaschine (2) nach einem der Ansprüche 13 oder 14, **dadurch gekennzeichnet, dass** sie einen Lüfter (16) und ein Traggehäuse (31) des Lüfters (16) umfasst, auf dem die Montageoberfläche ausgebildet ist, wobei die Montageoberfläche eine elektrische Verbindung bündig mit der Montageoberfläche und in elektrischem Kontakt mit dem elektrischen Verbinder (34) umfasst.

## Claims

1. Casing (28) of a turbine engine (2), notably for a compressor (4; 6) of an axial turbine engine, the casing (28) comprising:
- a wall (27), and
- at least one fastening flange (30) associated with the wall (27), the fastening flange (30) comprising a fastening surface that can be applied against a corresponding mounting surface of the turbine engine (2), or against another fastening surface,
**characterized in that**
the fastening flange (30) comprises at least one electrical connector (34) with one end lying flush with the fastening surface (32) of said fastening flange (30) and **in that** the wall (27) is a first wall (27), the casing (28) further comprising a second wall (27) with a fastening flange and electrical connector (34) identical or similar to those associated with the first wall (27), the fastening flanges (30A; 30B) being fastened together so as to provide an electrical contact between the connectors (34).

2. Casing (28) according to Claim 1, **characterized in that** the electrical connector (34) comprises an end surface which lies flush with the fastening surface (32) of the fastening flange (30), and/or which is at the position of the fastening surface (32).

3. Casing (28) according to one of Claims 1 and 2, **characterized in that** the flange (30) has a thickness, the connector (34) passing through said flange (30) in the direction of its thickness.

4. Casing (28) according to any of Claims 1 to 3, **characterized in that** it, notably the fastening flange (30), comprises indexing means capable of providing a positioning accuracy which is greater than or equal to the width of the electrical connector (34) at the position of the fastening surface (32).

5. Casing (28) according to any of Claims 1 to 4, **characterized in that** the electrical connector (34) is in the general shape of a rod with its main elongation in the direction of the thickness of the fastening flange (30).

6. Casing (28) according to any of Claims 1 to 5, **characterized in that** the electrical connector (34) comprises an enlargement (34B) at one of its ends at least, or at both of its ends opposed in the direction of the main elongation of said electrical connector.

7. Casing (28) according to any of Claims 1 to 6, **characterized in that** the fastening flange (30) comprises fastening means, notably fastening apertures and/or pins, the electrical connector (34) being at the radial height of said fastening means.

8. Casing (28) according to any of Claims 1 to 7, **characterized in that** the fastening flange (30) further comprises a housing (37) positioned in its radial height, the connector (34) being placed in said housing (37).

9. Casing (28) according to any of Claims 1 to 8, **characterized in that** the fastening flange (30) comprises an electrical insulator (36) surrounding the electrical connector (34) and separating the connector from the fastening flange, the electrical insulator forming a seal between the fastening flange (30) and the electrical connector (34) if required.

10. Casing (28) according to any of Claims 1 to 9, **characterized in that** the connector (34) is connected to an electrical cable (38), said cable passing through the fastening flange (30) if required.

11. Casing (28) according to any of Claims 1 to 10, **characterized in that** the casing (28) comprises a composite material with an organic matrix and reinforcing fibres which may be electrically conductive if required.

12. Casing (28) according to Claim 1 to 11, **characterized in that** it further comprises a third wall (32) with a fastening flange and electrical connector (34) identical or similar to those associated with the first wall (27), the fastening surface (32) of the flange of the third wall being a first fastening surface (32), said flange comprising a second fastening surface (32) opposed to the first fastening surface in the direction of the thickness of said flange, the electrical connector (34) of the third wall lying flush with each of the fastening surfaces of the third wall, said third wall being in contact with the fastening surfaces of the first and second wall if required.

13. Turbine engine (2), notably a turbojet, comprising at least one casing (28), **characterized in that** the casing is in accordance with any of Claims 1 to 12, and the turbine engine comprises a compressor (4; 6), the casing being a casing (28) of said compressor.

14. Turbine engine (2) according to Claim 13, **characterized in that** it comprises a flow separator (22) with an electric deicing module electrically connected to the electrical connector (34).

15. Turbine engine (2) according to one of Claims 13 or 14, **characterized in that** it comprises a fan (16) and a fan (16) support casing (31) on which the mounting surface is formed, the mounting surface comprising an connection lying flush with the mounting surface and in electrical contact with the electrical connector (34).
